Europäisches Patentamt

European Patent Office

Office européen des brevets

(19)

(11) Veröffentlichungsnummer: **0 309 651 B1**

# (12) EUROPÄISCHE PATENTSCHRIFT

(45) Veröffentlichungstag der Patentschrift:
03.04.91 Patentblatt 91/14

(51) Int. Cl.⁵: **B60L 7/28, B61H 7/08**

(21) Anmeldenummer: **88109109.4**

(22) Anmeldetag: **08.06.88**

(54) **Wirbelstromschienenbremse für Schienenfahrzeuge.**

(30) Priorität: 30.09.87 DE 3733053
23.12.87 DE 3743934

(43) Veröffentlichungstag der Anmeldung:
05.04.89 Patentblatt 89/14

(45) Bekanntmachung des Hinweises auf die
Patenterteilung:
03.04.91 Patentblatt 91/14

(84) Benannte Vertragsstaaten:
AT DE FR IT

(56) Entgegenhaltungen:
FR-A- 2 041 573
FR-A- 2 160 353
US-A- 2 071 737

(73) Patentinhaber: KNORR-BREMSE AG
Moosacher Strasse 80 Postfach 401060
W-8000 München 40 (DE)

(72) Erfinder: Kröger, Uwe
Haylerstrasse 27
W-8000 München 50 (DE)
Erfinder: Saumweber, Eckart, Dr.
Mühlstrasse 15
W-8035 Gauting (DE)

## Beschreibung

Die Erfindung betrifft eine Wirbelstromschienenbremse für Schienenfahrzeuge, die auf Strecken verkehren, welche mit seitlich und unterhalb der Schienenoberfläche ortsfest angeordneten, auf Änderungen magnetischer und/oder elektrischer Felder ansprechenden Sensoren für Signaleinrichtungen, insbesondere Achszähleinrichtungen, ausgerüstet sind, und deren wenigstens einer Wirbelstrombremsmagnet mit wenigstens einer gegebenenfalls eine Polplatte aufweisenden Polspule ausgerüstet ist.

Mit der österreichischen Patentschrift 317 290 ist eine Magnetschienenbremse bekanntgeworden, welche für Schienenfahrzeuge vorgesehen ist, die auf Strecken mit induktiver Signalbeeinflussung mit seitlich und unterhalb der Schienenoberfläche ortsfest angeordneten, gegen magnetische Störfelder abgeschirmten Sensoren verkehren. Der Schienenbremsmagnet ist hierbei mit einer sich über seine ganze Länge erstreckenden Stange aus ferromagnetischem Material ausgestattet, welche sich auf Seiten der Sensoren zu den Polschuhen des Schienenbremsmagneten nach unten versetzt befindet. Es hat sich gezeigt, daß derartige Stangenanordnung für eine Wirbelstromschienenbremse der eingangs genannten Art nicht ausreicht, um störende Einflüsse auf die Sensoren auszuschließen.

Es ist demgemäß Aufgabe der Erfindung, eine Wirbelstromschienenbremse der eingangs genannten Art mit einfachen Mitteln derart auszubilden, daß sie die Sensoren nicht zur Abgabe von Fehlsignalen oder zu sonstigen Funktionsstörungen veranlaßt.

Diese Aufgabe wird nach der Erfindung dadurch gelöst, daß sich im Bereich der beiden unteren Längskanten jeder Polspule des Wirbelstrombremsmagneten an deren Außenflächen zumindest je ein sich über zumindest annähernd deren ganze Länge erstreckendes Leitblech aus ferromagnetischem Material angeordnet ist.

Die nach der weiteren Erfindung zweckmäßige Ausgestaltung der Wirbelstromschienenbremse ist in den Unteransprüchen angegeben. Bei Strecken, welche mit Sensoren von Achszähleinrichtungen ausgestattet sind, die einerseits einer Schiene einer Sende- und gegenüberliegend andererseits der Schiene eine Empfangseinrichtung, insbesondere -spule, aufweisen, hat es sich als besonders vorteilhaft erwiesen, wenn im Bereich jeder unteren Längskante des Wirbelstrombremsmagneten ein im Querschnitt winkelartig ausgebildetes Leitblech angeordnet ist.

Es ist wesentlich, daß bei einer Wirbelstromschienenbremse gemäß der Erfindung die Leitbleche nicht nur eine Abschirmfunktion besitzen, sondern auch aktiv durch entsprechende Feldumlenkungen die vom Wirbelstrombremsmagneten bzw. den Sendespulen von Achszähleinrichtungen ausgehenden Felder derart beeinflussen können, daß die Sensoren keine Fehlsignale abgeben.

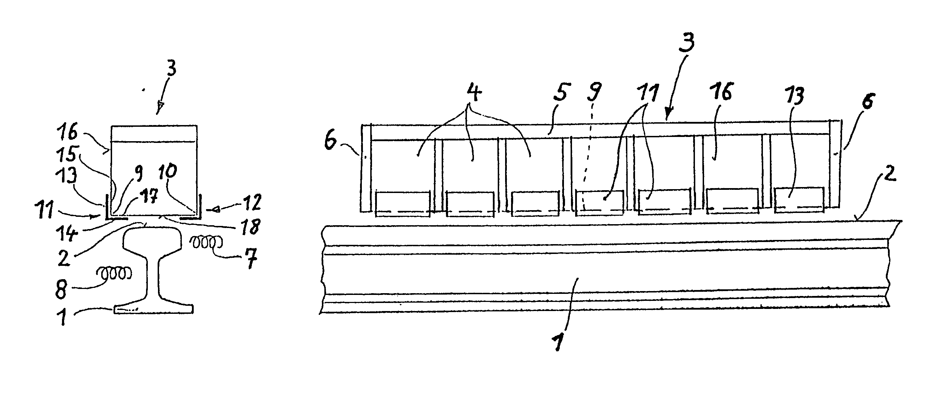

In der Zeichnung ist ein Ausführungsbeispiel für eine nach der Erfindung ausgebildete Wirbelstromschienenbremse in Stirn- und Seitenansicht dargestellt.

Oberhalb einer Schiene 1, mit geringem Abstand zur Schienenoberfläche 2, befindet sich ein Wirbelstrombremsmagnet 3. Der Wirbelstrombremsmagnet 3 besitzt eine Anzahl von Polspulen 4, welche in einer Reihe in Wechselpolfolge angeordnet sind. Die Polspulen 4 werden von einer Tragkonstruktion 5 gehalten, welche an beiden Enden eine Abschlußplatte 6 aufweisen kann. Der Wirbelstrombremsmagnet 3 wird von einem nicht dargestellten Fahrzeug getragen. Insoweit entspricht die Ausbildung des Wirbelstrombremsmagneten 3 dem Stand der Technik.

Beiderseits der Schiene 1 befindet sich unterhalb der Schienenoberfläche 2 je eine Spule 7 bzw. 8, welche einem im weiteren nicht gezeigten Sensor einer Signaleinrichtung, insbesondere einer Achszähleinrichtung, zugehören ; eine der Spulen 7 bzw. 8 kann dabei als eine Sende- und die andere Spule 8 bzw. 7 als eine Empfangsspule ausgebildet sein. Im Betrieb der Signaleinrichtung wird von der Sendespule ein Feld aufgebaut, welches beim Passieren eines Schienenfahrzeuges geändert wird, wobei die Änderung von der Empfangsspule registriert wird, was zu einer Signalabgabe des Sensors führt. Insoweit gehört auch die Signaleinrichtung dem Stand der Technik an.

Der Wirbelstrombremsmagnet 3 weist zwei untere Längskanten 9 und 10 auf. Im Bereich dieser Längskanten 9 und 10 sind an jeder Polspule 4 des Wirbelstrombremsmagneten 3 zwei Leitbleche 11 bzw. 12 angesetzt, deren jedes im Querschnitt winkelartig mit zwei Schenkeln 13 bzw. 14 ausgebildet ist. Die Leitbleche 11 und 12 bestehen aus ferromagnetischem Material, das zweckmäßig einen hohen, elektrischen Widerstand aufweist ; es kann zweckmäßig sein, die Leitbleche 11, 12 aus Trafoblech oder dergleichen zu fertigen. Die Leitbleche 11, 12 erstrecken sich über nahezu die gesamte Länge einer jeden Polspule 4 des Wirbelstrombremsmagneten 3. Die vertikal verlaufenden Schenkel 13 überdecken einen Oberflächenstreifen 15 der vertikalen, in Längsrichtung verlaufenden Außenfläche 16 der Polspulen 4 des Wirbelstrombremsmagneten 3 ; die Breite des Oberflächenstreifens 15 ist dabei, bezogen auf die Außenfläche 16 bzw. die Höhe des Wirbelstrombremsmagneten 3, gering. Die Schenkel 14 untergreifen die Polspulen 4 des Wirbelstrombremsmagneten 3, wobei sie jeweils einen Unterflächenstreifen 17 abdecken, welche, bezogen auf die untere Außenfläche 18 bzw. die Breite des Wirbelstrombremsmagneten 3, schmal sind.

In Abänderung der vorstehend beschriebenen Ausführungsform kann der Wirbelstrombremsmagnet auch nur eine Polspule aufweisen, welche sich über annähernd die ganze Länge des Wirbelstrombremsmagneten erstreckt. Bei dieser Ausführung erstrecken sich die Leitbleche ebenfalls über annähernd die Länge der Polspule und damit unterbrechungsfrei über annähernd die Länge des Wirbelstrombremsmagneten.

Bei beiden Ausführungsformen kann jeder Polspule ein diese umschließendes Spulengehäuse aus nichtmagnetischem Material zugeordnet sein. Die Leitbleche 11, 12 können dabei auf entsprechende Wandungsabschnitte des Spulengehäuses aufgesetzt und dort befestigt oder in die Wandung des Spulengehäuses streifenartig integriert bzw. eingelassen angeordnet sein ; im letzteren Fall bilden sie einen Teil der Wandung.

Falls der Wirbelstrombremsmagnet eine Reihe von Polspulen und nur ein diese Reihe umschließendes, sich über annähernd die Länge des Wirbelstrombremsmagneten erstreckendes Spulengehäuse aufweist, können die Leitbleche ebenfalls sich über die Länge des Spulengehäuses und damit ununterbrochen über annähernd die Länge des Wirbelstrombremsmagneten erstreckend ausgebildet werden, ohne einen magnetischen Kurzschluß zu bewirken. Die Leitbleche können dabei wieder auf der Gehäusewand befestigt oder in diese eingelassen werden. Es kann jedoch auch eine den Polspulen entsprechend unterbrochene Leitblechanordnung vorgesehen werden.

Es hat sich gezeigt, daß bei den beschriebenen Anordnungen ein Vorbeibewegen eines Wirbelstrombremsmagneten 3 an einem die Spulen 7 und 8 beinhaltenden Sensor 7, 8 letzteren nicht zur Abgabe von Fehlsignalen veranlaßt, da das von der Sendeeinrichtung der Achszähleinrichtung ausgehende Feld von den Leitblechen 11, 12 derart abgeschirmt und umgelenkt wird, daß es bzw. seine Änderung unterhalb der Sensoransprechschwelle gehalten wird.

In Abänderung der beschriebenen Ausführungsform kann es zweckmäßig sein, die Leitbleche 11 und 12 geschichtet, beispielsweise aus einer Anzahl von isoliert aufeinander geschichteten Einzelblechen bestehend, auszubilden. Dabei können die Einzelbleche abwechselnd aus ferromagnetischem Material mit hohem, elektrischen Widerstand und nichtmagnetischem Material mit niedrigem, elektrischen Widerstand, gegebenenfalls Trafo- und Aluminiumblechen bestehen. Weiterhin kann es zweckmäßig sein, seitlich und unterhalb des Wirbelstrombremsmagneten 3 weitere, sich zumindest annähernd über dessen Länge erstreckende Leitblechstreifen in nicht dargestellter Weise vorzusehen ; auch diese Leitblechstreifen können geschichtet ausgebildet sein. Schließlich ist es auch möglich, die beiden Schenkel 13 und 14 der Leitbleche 11 und 12 voneinander zu trennen und in jeweils geringem Abstand zur Längskante 9 bzw. 10 am Wirbelstrombremsmagneten 3 anzuordnen.

Falls der Wirbelstrombremsmagnet 3 an seiner Unterseite eine ferromagnetische Polplatte aufweist, können die Leitbleche unmittelbar seitlich an die Polplatte anschließend angeordnet sein. Bei Fehlen einer derartigen Polplatte kann sich an der Unterseite des Spulengehäuses des Wirbelstrombremsmagneten ein sich über dessen ganze Breite erstreckendes Leitblech befinden. Die günstigste Anordnung der Leitbleche kann durch entsprechende Feldmessungen insbesondere bei bewegtem Wirbelstrombremsmagneten 3 bestimmt werden.

## Ansprüche

1. Wirbelstromschienenbremse für Schienenfahrzeuge, die auf Strecken verkehren, welche mit seitlich und unterhalb der Schienenoberfläche (2) an ortsfest angeordneten, auf Änderungen magnetischer und/oder elektrischer Felder ansprechenden Sensoren (7, 8) für Signaleinrichtungen, insbesondere Achszähleinrichtungen, ausgerüstet sind, und deren wenigstens einer Wirbelstrombremsmagnet (3) mit wenigstens einer gegebenenfalls eine Polplatte aufweisenden Polspule (4) ausgerüstet ist, dadurch gekennzeichnet, daß sich im Bereich der beiden unteren Längskanten (9, 10) jeder Polspule (4) des Wirbelstrombremsmagneten (3) an deren Außenflächen (16, 18) zumindest je ein sich über zumindest annähernd deren ganze Länge erstreckendes Leitblech (11, 12) aus ferromagnetischem Material befindet.

2. Wirbelstromschienenbremse nach Anspruch 1, mit wenigstens einem der bzw. den Polschuhen zugeordneten Spulengehäuse (5) aus nichtmagnetischem Material, dadurch gekennzeichnet, daß wenigstens eines der Leitbleche (11, 12) an einer Wandung des Spulengehäuses (5) befestigt ist.

3. Wirbelstromschienenbremse nach Anspruch 1, mit wenigstens einem der bzw. den Polschuhen zugeordneten Spulengehäuse (5) aus nichtmagnetischem Material, dadurch gekennzeichnet, daß wenigstens eines der Leitbleche (11, 12) in eine Wandung des Spulengehäuses (5) integriert angeordnet ist.

4. Wirbelstromschienenbremse nach Anspruch 1, 2, oder 3, dadurch gekennzeichnet daß die Leitbleche (11, 12) einen hohen, elektrischen Widerstand aufweisen und gegebenenfalls aus Trafoblech bestehen.

5. Wirbelstromschienenbremse nach Anspruch 1, 2, 3 oder 4, dadurch gekennzeichnet, daß zumindest einige der Leitbleche (11, 12) aus geschichteten Einzelblechen bestehen.

6. Wirbelstromschienenbremse nach Anspruch 5, dadurch gekennzeichnet, daß die Einzelbleche abwechselnd aus ferromagnetischem Material mit hohem, elektrischen Widerstand und nichtmagnetischem, einen niedrigen elektrischen Widerstand aufweisendem Material, gegebenenfalls Trafo- und Aluminiumblechen bestehen.

7. Wirbelstromschienenbremse nach einem oder mehreren der vorstehenden Ansprüche, dadurch gekennzeichnet, daß die Leitbleche (11, 12) zumindest die beidseitig an die unteren Längskanten (9, 10) des Wirbelstrombremsmagneten (3) unmittelbar anschließenden Flächenstreifen (15, 17) abdecken, wobei die Flächenstreifen (15, 17), bezogen auf die Höhe bzw. Breite des Wirbelstrombremsmagneten (3), schmal sind.

8. Wirbelstromschienenbremse nach Anspruch 7, wobei der Wirbelstrombremsmagnet (3) an seiner Unterseite wenigstens eine ferromagnetische Polplatte aufweist, dadurch gekennzeichnet, daß die Leitbleche (11, 12) unmittelbar seitlich an die Polplatte anschließend angeordnet sind.

9. Wirbelstromschienenbremse nach einem oder mehreren der vorstehenden Ansprüche, wobei die Strecken mit Sensoren (7, 8) für Achszähleinrichtungen ausgestattet sind, die einerseits einer Schiene (1) eine Sende- und gegenüberliegend andererseits der Schiene eine Empfangseinrichtung, insbesondere - spule (7, 8) aufweisen, dadurch gekennzeichnet, daß im Bereich jeder unteren Längskante (9, 10) des Wirbelstrombremsmagneten (3) ein im Querschnitt winkelartig ausgebildetes Leitblech (11, 12) angeordnet ist.

10. Wirbelstromschienenbremse nach einem oder mehreren der Ansprüche 1 bis 6, dadurch gekennzeichnet, daß sich an der Unterseite des Spulengehäuses (5) wenigstens ein sich über diesen ganze Breite erstreckendes Leitblech (11 od. 12) befindet.

## Claims

1. Eddy current track brake for railway vehicles travelling along lines equipped with sensors (7, 8) for signalling means, in particular axle counter means, which are stationarily disposed laterally of and underneath the rail surface (2) and responsive to variations of magnetic and/or electric fields, said brake including at least one eddy current brake magnet (3) provided with at least one pole coil (4) including, if necessary, a pole plate, **characterized** in that in the zone of the two lower longitudinal edges (9, 10) of each pole coil (4) of said eddy current brake magnet (3), at the outside surfaces (16, 18) thereof, at least one conductive sheet metal element (11, 12) each of ferromagnetic material is provided which extends over at least approximately the overall length of said edges.

2. Eddy current track brake according to Claim 1, comprising at least one coil housing (5) of non-magnetic material, which is associated with the pole pieces or at least one thereof, **characterized** in that at least one of said conductive sheet metal elements (11, 12) is fastened in one of the walls of said coil housing (5).

3. Eddy current track brake according to Claim 1, comprising at least one coil housing (5) of non-magnetic material, which is associated with the pole pieces or at least one thereof, **characterized** in that at least one of said conductive sheet metal elements (11, 12) is disposed and integrated in one of the walls of said coil housing (5).

4. Eddy current track brake according to Claim 1, 2 or 3, **characterized** in that said conductive sheet metal elements (11, 12) present a high electric resistivity and, as far as applicable, consist of a stamping core plate material.

5. Eddy current track brake according to Claim 1, 2, 3 or 4, **characterized** in that at least some of said conductive sheet metal elements (11, 12) are composed of sandwiched separate metal sheets.

6. Eddy current track brake according to Claim 5, **characterized** in that said separate conductive sheet metal elements consist of ferromagnetic material presenting a high electric resistivity in alternation with a non-magnetic material presenting a low electric resistivity, as far as applicable stamping core plates and aluminium sheets.

7. Eddy current track brake according to any or several of the preceding claims, **characterized** in that said conductive sheet metal elements (11, 12) cover at least the surface strips (15, 17) immediately adjacent to the lower longitudinal edges (9, 10), on either side thereof, of said eddy current brake magnet (3), with said surface strips (15, 17) being narrow, relative to the height or width of said eddy current brake magnets (3).

8. Eddy current track brake according to Claim 7, wherein said eddy current brake magnet (3) is provided at its underside with at least one ferromagnetic pole plate, **characterized** in that said conductive sheet metal elements (11, 12) are disposed so as to be laterally immediately adjacent to said pole plate.

9. Eddy current track brake according to any or several of the preceding claims, wherein the lines are equipped with sensors (7, 8) for axle counter means which include a transmitter means, in particular coil means (7, 8), on one side of a rail (1) and opposite receiver means, in particular coil means (7, 8), on the other side of said rail, **characterized** in that in the zone of each of said lower longitudinal edges (9, 10) of said eddy current brake magnet (3) a conductive sheet metal element (11, 12) is disposed whose cross-sectional is of an angular design.

10. Eddy current track brake according to any or several of Claims 1 to 6, **characterized** in that at the underside of said coil housing (5) at least one conductive sheet metal element (11 or 12) is provided which extends all over the width thereof.

## Revendications

1. Frein sur rail à courant de Foucault pour des véhicules sur rails qui circulent sur des voies qui sont pourvus latéralement et en dessous de la surface supérieure des rails (2) et en des emplacements fixes, de capteurs (7, 8) pour des dispositifs de signalisation, en particulier pour des installations de comptage des essieux et sensible à des modifications de champs magnétiques et/ou électriques, et dont l'un au moins des électroaimants à courant de Foucault (3) est pourvu d'au moins une bobine polaire (4) qui comporte éventuellement une plaque polaire, caractérisé par le fait que dans la région des deux bords longitudinaux inférieurs (9, 10) de chaque bobine polaire de l'électroaimant de freinage à courant de Foucault (3) sont prévues, au niveau de sa surface extérieure (16, 18), respectivement au moins une tôle conductrice (11, 12) en un matériau ferromagnétique qui s'étend au moins approximativement sur la totalité de sa longueur.

2. Frein sur rail à courant de Foucault selon la revendication 1, avec au moins un carter de bobine (5), associé à la pièce polaire ou aux pièces polaires et en un matériau non magnétique, caractérisé par le fait qu'au moins l'une des tôles conductrices (11, 12) est fixée à une paroi du carter de bobine (5).

3. Frein sur rail à courant de Foucault selon la revendication 1, avec au moins un carter de bobine (5) associé à la pièce polaire ou aux pièces polaires, et en un matériau non magnétique, caractérisé par le fait qu'au moins l'une des tôles conductrices (11, 12) est intégrée à une paroi du carter de bobine (5).

4. Frein sur rail à courant de Foucault selon la revendication 1, 2 ou 3, caractérisé par le fait que les tôles conductrices (11, 12) présentent une résistance électrique élevée et sont éventuellement constituées avec une tôle pour transformateur.

5. Frein sur rail à courant de Foucault selon la revendication 1, 2, 3 ou 4, caractérisé par le fait qu'au moins quelques tôles conductrices (11, 12) sont constituées par des tôles individuelles stratifiées.

6. Frein sur rail à courant de Foucault selon la revendication 5, caractérisé par le fait que les tôles individuelles sont constituées en alternance avec un matériau ferromagnétique à résistance électrique élevée et en un matériau non magnétique à résistance électrique faible, éventuellement par des tôles pour transformateurs et des tôles en aluminium.

7. Frein sur rail à courant de Foucault selon l'une ou plusieurs des revendications précédentes caractérisé par le fait que les tôles conductrices (11, 12) recouvrent au moins les bandes de surface (15, 17) qui font directement suite, sur les deux côtés, aux bords longitudinaux inférieurs (9, 10) de l'électroaimant de freinage à courant de Foucault (3), alors que les bandes de surface (15, 17) sont étroites, comparativement à la hauteur ou à la largeur de l'électroaimant de freinage à courants de Foucault (3).

8. Frein sur rail à courant de Foucault selon la revendication (7), dans lequel l'électroaimant de freinage à courant de Foucault (3) comporte, sur son côté inférieur, au moins une plaque polaire ferromagnétique, caractérisé par le fait que les tôles conductrices (11, 12) sont disposées directement sur le côté de la plaque polaire.

9. Frein sur rail à courant de Foucault selon l'une ou plusieurs des revendications précédentes, dans lequel les voies sont pourvues de capteurs (7, 8) pour des dispositifs de comptage des essieux, et qui comporte, d'un côté du rail, un dispositif d'émission et en face et de l'autre côté du rail, un dispositif de réception, en particulier une bobine d'émission et de réception (7, 8), caractérisé par le fait que dans la région de chaque bord longitudinal inférieur (9, 10) de l'électroaimant de freinage à courant de Foucault (3) est disposée une tôle conductrice (11, 12) ayant, en section transversale, une allure angulaire.

10. Frein sur rail à courant de Foucault selon l'une ou plusieurs des revendications 1 à 6 caractérisé par le fait que sur le côté inférieur du carter de bobine (5) se trouve au moins une tôle conductrice (11, 12) qui s'étend au moins sur toute la largeur.

EP 0 309 651 B1